# EUROPEAN PATENT SPECIFICATION

(11) **EP 3 165 511 B1**
(45) Date of publication and mention of the grant of the patent: **08.08.2018**
(21) Application number: 16197017.3
(22) Date of filing: 03.11.2016
(51) Int. Cl.: C03C 17/00, C09D 129/00

(54) **METHOD FOR PRODUCING A POLYMER FILM WITH A HIGH CONCENTRATION OF SILVER NANOPARTICLES**
VERFAHREN ZUR HERSTELLUNG EINES POLYMERFILMS MIT EINER HOHEN KONZENTRATION VON SILBERNANOPARTIKELN
PROCÉDÉ DE PRODUCTION D'UN FILM POLYMÈRE À CONCENTRATION ÉLEVÉE DE NANOPARTICULES D'ARGENT

(30) Priority: 03.11.2015 BY 20150528; 29.12.2015 US 201514981906
(43) Date of publication of application: 10.05.2017
(73) Proprietor: The State Scientific Institution "Institute of Chemistry of New Materials of National Academy of Sciences of Belarus", 220141 Minsk (BY); King Abdulaziz City for Science and Technology, 11442 Riyadh (SA)
(72) Inventor: POTAPOV, Aleksey Leonidovich, 220131 Minsk (BY); BINHUSSAIN, Mohammed, 11442 Riyadh (SA); IVANOVA, Nadezhda Arkadievna, 220018 Minsk (BY); ALARIFI, Hani Abdulkareem, 11442 Riyadh (SA); DAINEKO, Oksana Anatolievna, 220141 Minsk (BY); AGABEKOV, Vladimir Enokovich, 220035 Minsk (BY)
(74) Representative: Gulde & Partner

(56) References cited:
- EP-A1- 1 580 825
- US-A1- 2002 145 132
- A.L. POTAPOV; O.A. DAINEKO; N.A. IVANOVA; V.E. AGABEKOV; M. BIN-HUSSAIN: "Formation and properties of films based on polyvinyl alcohol and doped with silver nanoparticles", APPL. SURF. SCI., 2 March 2015 (2015-03-02), XP002767263,

## Description

### TECHNICAL FIELD

The subject matter is directed to methods for producing polymer films with Ag nanoparticles (NPs), which can be used in stealth technologies, for creating thermophotoelectric (TPE) elements, photo detectors, radiation cooling and heating of optoelectronic devices, in spectroscopy of surface-enhanced Raman scattering (SERS), and for manufacturing LC devices.

### BACKGROUND

Bactericidal properties of silver are well known, due to them films with Ag NPs have a wide variety of application in medical practice.

Optical and biological properties of polymer composites modified with Ag NPs substantially depend on such parameters as concentration, size and stability of NPs.

In a series of papers [1-7] concerning synthesis of Ag NPs, the authors are able to control both the shape and the size of NPs, but studied concentrations of NPs in colloidal systems are small and are located in the range of 0.001 till 0.005 mol/l, even in cases where the concentration is high.

Traditional methods of obtaining polymer composites modified with metal NPs, described in scientific literature [8-11] usually include synthesis and stabilization of NPs in solution followed by their insertion in polymer matrix.

Unstabilized Ag NPs undergo rapid oxidation and easily aggregate in solutions. Most serious disadvantages of traditional and new methods of synthesis of Ag NPs in aqueous media are: the impossibility of achievement of high concentrations of NPs (more than 1 wt..%) in final solutions, as well as complexity of fulfillment and use of aggressive substances [8].

A number of methods for producing polymer composites with Ag NPs, which are formed directly in polymer (dissolved or swelled in the solvent) were described. These methods allow to increase the concentration of NPs and stability of composite compared with above techniques [8-11].

Method for producing Ag nanocomposites on the basis of synthetic water-soluble polymers is known [12]. The method consists in the reduction of Ag ions in the polymer solution. Copolymers of 2-dioxy-2-methacrylamido-D-glucose with 2-dimethylamino-ethylmethacrylate or 2-diethylaminoethyl-methacrylate simultaneously combining the properties of reductant of Ag ions and stabilizer of formed NPs are used as polymers.

The disadvantage of the process [12] consists in the fact that a number of toxic substances such as methacrylamide (MAC of 0.3 mg/m³), methacrylic acid (MAC 10 mg/m³), dimethylformamide (MAC 10 mg/m³) are used during a process for preparing a composition.

The process for producing Ag NPs in polyvinyl alcohol (PVA) matrix (or matrix-based polyvinylpyrrolidone) as sensors for enhanced Raman scattering is proposed [13]. Selection of the polymer as matrix and absence of active ligands allowed the authors to obtain films with Ag NPs, used as sensors. The disadvantage of this method is low stability of Ag NPs.

Method for manufacturing a fibrous material based on PVA containing Ag NPs is described [14]. The method for manufacturing consists of three stages:
- electromagnetic irradiation in microwave oven required for the preparation of liquid suspension of PVA and silver nitrate (60-90 seconds);
- obtaining a fibrous material by electrospinning;
- heat treatment of fibrous material at temperature of 80-150 °C.

The disadvantage of the process [14] is the increasing of Ag NPs sizes with time; the only (weak) stabilizer is PVA.

According to the method of obtaining Ag NPs [15]: AgNO₃, oleate Na (ligand) and borohydride Na were added in a solution of PVA, gelatin (in water) or polyvinyl butyral (with ethyl or propyl alcohol). As stated in the description, the invention allows to obtain the ensembles of NPs coated with ligand shell with low degree of aggregation in viscous media and films. The disadvantage of the process [15] is the irregularity of Ag ions reduction due to the absence of stirring, which leads to high degree of heterogeneity.

The process for preparing Ag NPs coated with ligand shell in the polymer matrix, as described in [16] (prototype) is the closest one to the claimed technical essence and attainable effect. This process involves the reduction of AgNO₃ in reaction solution. The reaction solution is prepared by sequential addition of AgNO3 solutions, citrate Na (reductant and stabilizer), Na oleate (stabilizer) and Na borohydride to the polymer matrix; PVA or gelatin is used as a polymer. Reduction is carried out by irradiating a copper laser at a wavelength of 510.6 nm or 578.2 nm. In accordance with the description, stable highly ordered Ag NPs coated with ligand shell are obtained in this case. The disadvantage of this method is the formation of Ag agglomerates.

US 2002/0145132 A1 discloses a method for producing composite polymers comprising a polymer and nanometer-sized silver particles dispersed therein. The method comprises providing a solution of the polymer, adding a silver salt to the solution, casting and drying the solution, and irradiating the resulting film with ultraviolet light.

EP 1 580 825 A1 is directed to a polymer film capable of "on" and "off" switching in an electric field.

### BRIEF DESCRIPTION OF THE DRAWINGS

Fig. 1 is a diagram of an example installation for applying an electric field to a polymer film for creating silver nanoparticles in the polymer film.
Fig. 2 is a diagram of an example polymer firm with various concentrations of silver nanoparticles.
Fig. 3a is a diagram of an example polymer film with sparse silver nanparticles.
Fig. 3b is a diagram of an example polymer film with plentiful silver nanparticles due to drift.
Fig. 4 is a flow diagram of an example method of producing a polymer film with a high concentration of silver nanoparticles.

### DETAILED DESCRIPTION

This disclosure describes methods for preparing a stable polymer (e.g., PVA) film with a high (more then 1 wt %) concentration of silver nanoparticles ("Ag NPs") of uniform size without the formation of submicron particles and agglomerates.

This object is achieved by synthesizing Ag NPs by means of AgNO₃ reduction in a viscous reaction solution ("forming composition"), in which the formation of Ag NPs occurs during drying of the forming composition by slow reduction reaction of Ag ions by soft organic reducing agents. An electric or electromagnetic field is used for changing the filling degree and stabilization of Ag NPs that are forming in the film, and UV irradiation can be used for accelerating reduction processes of Ag+ ions and drying the polymer. The subject matter is described in the following examples.

### Example 1

10 % aqueous solution of PVA Mowiol 28-99 (Germany) was used for the synthesis of film. Prepared PVA solution also contains 0.05 wt. % quaternary ammonium compound (QAC), 0.5 wt. % AgNO₃ (∼0.03 mol/l), stabilizers and softeners.

PVA and QAC are reducing agents of Ag⁺ ions.

After AgNO₃ introduction forming composition is homogenized in ultrasound bath. Pretreatment time in ultrasound bath (W = 100 Wt. v=42 kHz) is 1 h, temperature is 50 °C.

The film is created from forming composition pretreated in ultrasound bath by pouring method. Solution is applied on degreased mirror glass using smearing. Applied PVA composition is dried in drying chamber at 22.0 ± 2.0 °C for 36 h up to remaining humidity 5.0-7.0 %.

Ag NPs are formed due to reduction reaction of Ag⁺ ions during film drying process.

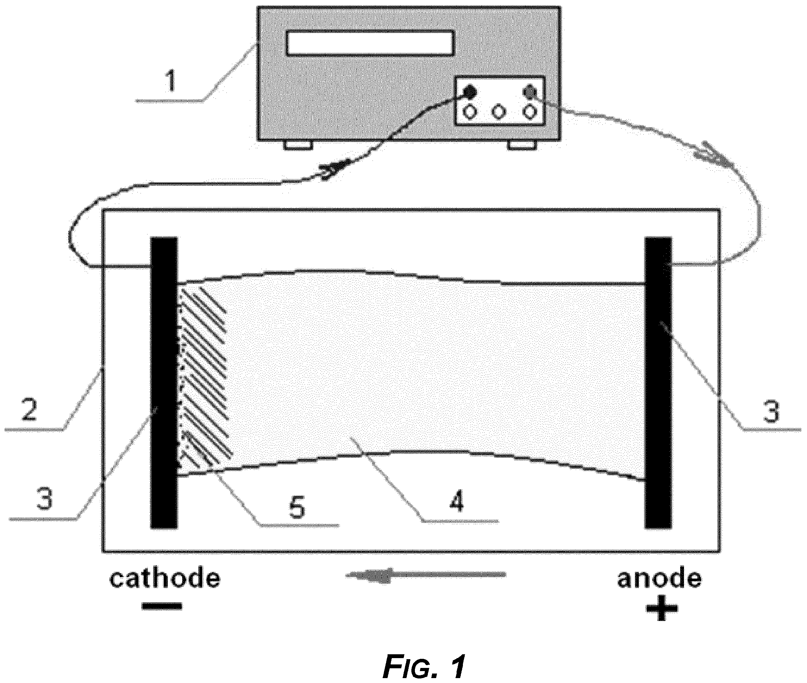

The direct current (DC) is passed through liquid composition during drying process. The DC shifts Ag and Ag NPs seeds passing through PVA composition with ions and NPs. Thus, it is possible to change the number of Ag NPs per unit area of the film. The current is passed on the installation that is shown schematically in Figure 1. Input value of current and voltage of the DC source are I_{MAX} = 890 mA, U = 99,9 V.

Figure 1 shows an installation diagram of transmission of DC current through the liquid PVA composition with Ag: 1 - the DC source B5-49 (output voltage is 0-99, 9V, output current is 0-999 mA, synchronization by U). 2 - A degreased mirror, on which the liquid composition is poured on the surface of the mirror. 3 - steel electrodes. 4 - a thin layer of liquid PVA film with Ag. 5 - an area where Ag NPs displace.

UV irradiation with the UV lamp Osram 300W Ultra-Vitalux is used in order to enhance Ag ions reduction and drying of PVA film with Ag NPs. The integrated light power of Osram lamp (330 nm - 10 microns) at the distance of 60 cm is 10.9 mW/cm² at the distance of 45 cm - 14.8 mW/cm² at the distance of 30 cm - 21.4 mW/cm²

The integrated light power of UV lamp is 24,7 mW/cm², the temperature is 31 °C. Drying film is treated as follows: first 5 minutes - only by constant current, and then for 35 minutes - by the combined effects of current and UV lamp, and finally 30 min - only by UV irradiation.

Electrical resistance Rsq of liquid film is 1-2 kΩ while moving the DC. Resistance differs in different directions, because Ag NPs are oriented in a certain way under constant current (in addition, EMF arise in PVA composition). When the film dries, Ag particles and ions lose their mobility, the film becomes an insulator.

The actual current I_{R} through the liquid film is 50-100 mA. After drying, film resistance Rsq is ∼ 20 MΩ.

### Example 2

PVA composition is obtained by the procedure described in Example 1. Input current value and voltage of the DC source were not changed. This Example differs from Example 1 in that the UV lamp is lowered in 2 times in order to increase the temperature and to accelerate hardening of PVA film - the integrated light power of UV lamp is 49 mW/cm², glass temperature is 35 °C. In comparison with the Example 1 current exposure time is increased and time of irradiation is reduced (as UV lamp was lowered below). The film is treated as follows: first 5 minutes - only the DC, then 45 minutes - by the combined effect of current and UV lamp.

Rsq of liquid film is 5 kΩ while moving current. The difference compared to the first Example can be explained by the influence of temperature and, consequently, higher viscosity of liquid PVA film. Actual current I_{R} is 20 mA through the liquid film.

### Example 3

PVA composition is obtained as described in Example 1. Example differs from Example 1 in that input current value I_{MAX} is set equal to 250 mA (voltage remained unchanged - 99.9 V), the UV lamp is raised over the film up to 60 cm (10,9 mW/cm²), since after a previous experiment (Example 2) the surface of the film facing the lamp became rough. The temperature of the glass is 27 °C. Drying film is treated as follows: first 5 minutes - only the DC, then 100 minutes - by the combined effect of current and the UV lamp. Compared with previous examples Rsq of PVA composition is substantially increased, I_{R} is 4 mA.

### Example 4

PVA composition is obtained as described in Example 1. This example differs from Example 1 in the following parameters: input current value I_{MAX} = 250 mA (voltage remained unchanged), the integrated light power of UV lamp is 10,9 mW/cm², glass temperature is 27 °C. The film was treated as follows: first 15 minutes - only the DC, then 85 minutes - by the combined effect of current and the UV lamp. During the first two hours, reduction Rsq occurs (average value Rsq = 25 kΩ) with Rsq subsequent growth up to 1 MΩ and higher (during completely drying of PVA film). The strength of current I_{R} drops after 2.5 h (5-6 mA in the initial period of time up to zero) that is to be expected with an increase in Rsq.

### Example 5

PVA composition is obtained as described in Example 1. Unlike Example 1, input current value I_{MAX} is equal to 125 mA, the integrated light power of UV lamp is 10,9 mW/cm², glass temperature is 26 °C. Current exposure time is increased up to 30 hours 10 minutes (during 1 hour - the joint effect of the DC and UV lamp). Rsq and I_{R} measurements were not performed during this experiment in order not to stop the process of passing the DC through the PVA film with Ag and not distort the measurement of Rsq in the opposite direction (from cathode to anode)

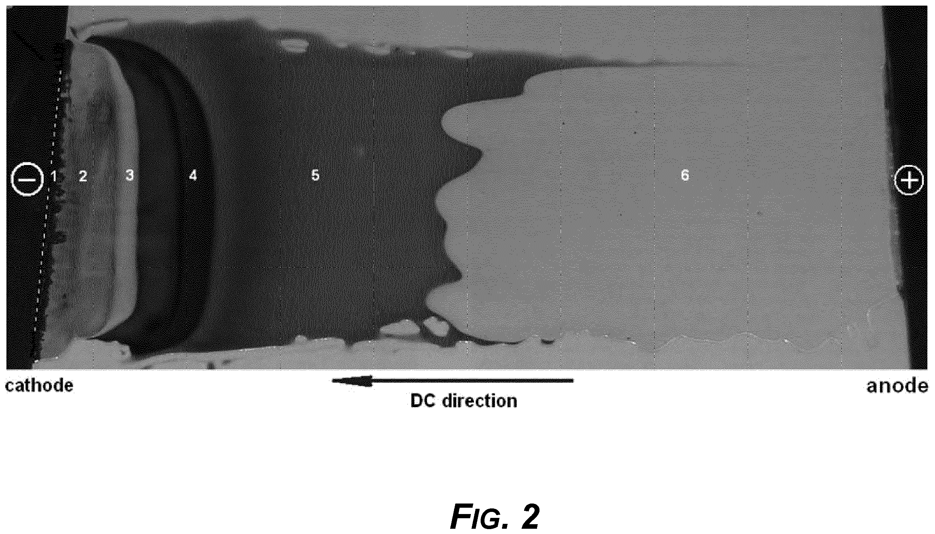

As a result, areas with different concentrations of Ag NPs exhibit due to long pass of current on the PVA film (Figure 2).

Figure 2 shows areas with various concentrations of Ag NPs after passing the DC through the PVA film for 30 h 10 min (Example 5). 1 - black (near the cathode); 2 - light red; 3 - yellow, transparent; 4 - dark brown, opaque; 5 - brown, translucent; 6 - yellow, transparent.

When comparing the results obtained in Examples 1-5 a number of variable parameters can be identified that affect the concentration of Ag NPs in PVA film. The parameters in the preparation of PVA film with Ag NPs were changed in the following ranges as in Table 1.

**Table 1**

| Ranges of variation of parameters, which have an impact on formation of PVA film with Ag NPs, and their optimal values | | |
|---|---|---|
| **Parameter** | **Range of variation** | **Optimal value** |
| Input current I_{MAX}, mA | 125-890 | 250 |
| Real current I_{R} passing through the composition, mA | 0,1-100 | 2-6 |
| Time under the influence of the DC, h | 0,67-30,17 | 1,5-2,5 |
| Integrated light power of UV lamp, mW/cm² | 10,9 - 49 | 10,9 - 12 |
| Irradiation time, min | 45-100 | 65-100 |

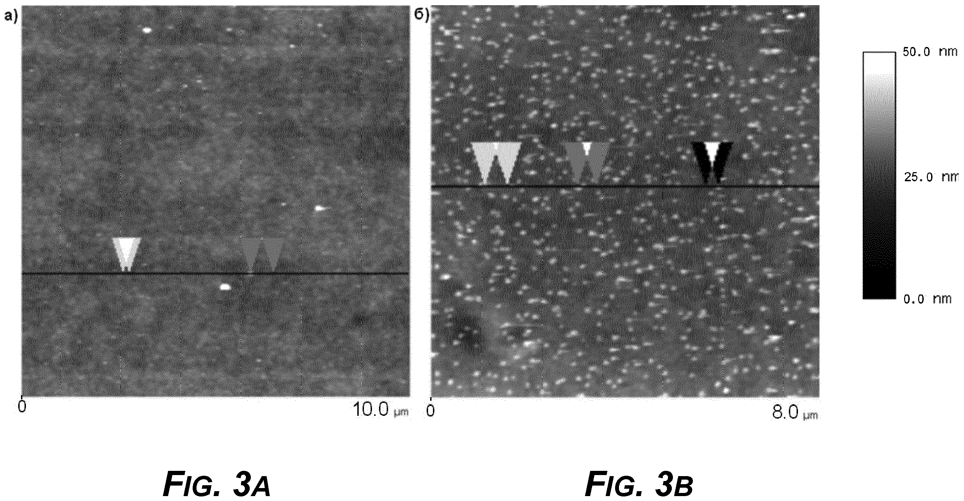

At optimal values (Examples 3 and 4) a big part of the obtained Ag NPs in PVA film has an average size of 50 nm (Figure 3b). In all experiments, after drying the film is an insulator.

Figs. 3a and 3b show AFM micrographs of an example PVA film (example 3). In Fig. 3a, an area is impoverished with respect to particles of Ag. Fig. 3b shows an area where the predominant part of Ag is shifted as a result of drift.

Unlike the prototype, all samples of PVA film with Ag NPs, prepared according to Examples 1-5, a peak with a maximum of 430 nm is observed in absorption spectra. This peak is the peak of plasmon resonance of Ag NPs, an average size of which is 50 nm [17-19], suggesting that the specified Ag NPs are contained in the PVA film samples.

The advantages of the proposed method for producing metal-polymeric film are:
- possibility to change filling degree and to stabilize Ag NPs appearing in the PVA film due to change of intensity and duration of the DC action;
- achievement of high (more than 1 wt..%) content of Ag NPs in PVA film without visible metallization;
- obtaining uniform distribution of Ag NPs in PVA film within the area where NPs are shifted (Fig. 3);
- obtaining Ag NPs in PVA film of uniform size
- absence of toxic reagents.

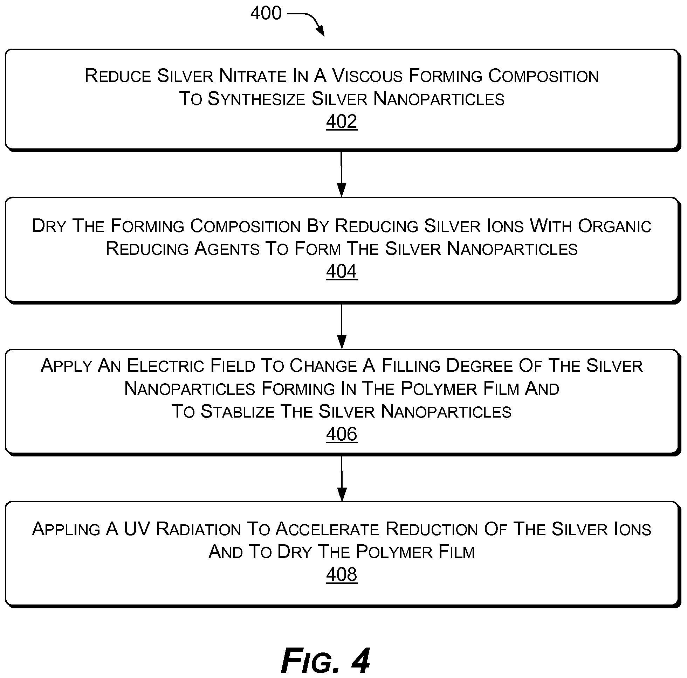

Fig. 4 shows an example method 400 for producing a polymer film based on polyvinyl alcohol (PVA) having a high concentration of silver nanoparticles.

At block 402, silver nitrate is reduced in a viscous forming composition to synthesize the silver nanoparticles.

At block 404, the forming composition is dried by reducing silver ions with organic reducing agents to form the silver nanoparticles.

At block 406, an electric field is applied to change a filling degree of the silver nanoparticles forming in the polymer film and to stabilize the silver nanoparticles.

At block 408, a UV radiation is applied to accelerate reduction of the silver ions and to dry the polymer film.

### Sources of information

1 P. Khanna, N. Singh, D. Kulkarni et al, Water based simple synthesis of re-dispersible silver nano-particles, Materials Letters, 61, 2007, 3366-3370.
2 A. Panacek, L. Kvítek, R. Prucek et al, Silver colloid nanoparticles: synthesis, characterization, and their antibacterial activity, J. Phys Chem B., 110, 2006, 16248-53.
3 M. Tsuji, Y. Nishizawa, K. Matsumoto et al, Rapid synthesis of silver nanostructures by using microwave-polyol method with the assistance of Pt seeds and polyvinylpyrrolidone, Colloids and Surfaces A: Physicochemical and Engineering Aspects, 293, 2007, 185-194.
4 C.Y. Tai, Y.H. Wang and H.S. Liu, A green process for preparing silver nanoparticles using spinning disk reactor, AlChE Journal, 54, 2008, 445-452
5 H. Wang, X. Qiao, J. Chen et al, Preparation of silver nanoparticles by chemical reduction method, Colloids and Surfaces A Physicochemical and Engineering Aspects, 256, 2005, 111-115.
6 A. Hu, J.Y. Guo, H.A. Alarifi et al, Low temperature sintering of Ag nanoparticles for flexible electronics packaging, Appl. Phys. Lett., 97, 2010, 153117-1-3.
7 H.A. Alarifi, A. Hu, M. Yavuz and Y. Zhou, Silver nanoparticle paste for low-temperature bonding of copper, J. Electron. Mater., 40, 2011, 1394-1402.
8 Yu A. Krutyakov, A.A. Kudrinskiy, A.Yu. Olenin and Lisichkin G.V. Synthesis and properties of silver nanoparticles: advances and prospects. Russ. Chem. Rev., 77 (3), 2008, Turpion - Moscow Ltd. (United Kingdom), 233-257.
9 S. Huang, O'Brien and S. Liu, Dielectric film with nanoparticles, US 20130207231(A1), January 18 2013.
10 D.J. Aherne, D.M. Ledwith and J.M. Kelly, Process for preparing nanoparticles, US 2011/0064603A1, March 17 2011
11 M.N. Nichik, A.I. Lesnikovich, S.V. Voitekhovich et al,, Use of silver nanoparticles stabilized by 1-phenyl-5-mercapto-tetrazole as an antibacterial agent, BY 16485, October 30 2012.
12 T.N. Nekrasova, Y.I. Zololova, O.V. Nazarova et al., Method for producing silver nanocomposites based on synthetic water-soluble polymers, RU 2485051, November 6 2011
13 M. Brennan, G. Armstrong, J. Kelly et al., Sensors for detecting an analyte using silver nanoparticles, US 8263418 B2, September 11 2012.
14 L.B. Taek, N.T. Hiep, H.H. Jin et al, .PVA nano fibrous mats comprising Ag nanoparticles and preparation method of the same, KR 20120010867 (A), February 06 2012
15 V.M. Kobryansky, A.S. Averyushkin, D.N. Vasiliev et al., Method for producing silver nanoparticles with a modified ligand shell in high-viscous matrix, RU 2526967, June 10 2014.
16 V.M. Kobryansky, A.S. Averyushkin, D.N. Vasiliev et al., Method for producing silver nanoparticles in polymer matrices under laser irradiation, RU 2510310, March 27 2014
17 S.J. Oldenburg Silver Nanoparticles: Properties and Applications. 2012, Sigma-Aldrich. Web, http://www.sigmaaldrich.com/materials-science/nanomaterials/silver-nanoparticles.html. - (accessed: 24.02.2015).
18 A.L. Potapov, O.A. Daineko, N.A. Ivanova, V.E. Agabekov and M. Bin-Hussain, Formation and properties of films based on polyvinyl alcohol and doped with silver nanoparticles, Appl. Surf. Sci., DOI: j.apsusc.2015.02.149, 2015.
19 A.L. Potapov, N.A. Ivanova, O.A. Daineko, V.E. Agabekov and M. Bin-Hussain. Surface distribution of silver nanoparticles formed in polyvinyl alcohol film. Reports of XI Int. conf. "Methodological Aspects of the Scanning Probe Microscopy" (BELSPM-2014), October 21-24, 2014, Minsk, p. 124-128.

## Claims

1. A method for producing a polymer film based on polyvinyl alcohol (PVA) having a high concentration of silver nanoparticles, comprising:
providing a viscous forming composition comprising silver nitrate, polyvinyl alcohol and an organic reducing agent;
drying the forming composition while reducing silver ions with the organic reducing agent to form a film comprising silver nanoparticles;
applying an electric field to change a filling degree of the silver nanoparticles forming in the polymer film and to stabilize the silver nanoparticles; and
applying UV radiation to accelerate reduction of the silver ions and to dry the polymer film.

2. The method of claim 1, wherein applying the electric field comprises flowing an electrical current of 2-6 mA through the polymer film.

3. The method of claim 1, wherein applying the electric field comprises flowing an electrical current through the polymer film for an exposure time of 1.5-2.5 hours.

4. The method of claim 1, wherein applying the UV radiation comprises a duration of 65-100 minutes.

5. The method of claim 1, wherein applying the UV radiation comprises an integrated light power of 10.9-12 mW/cm².

## Patentansprüche

1. Verfahren zur Herstellung eines auf Polyvinylalkohol (PVA) basierenden Polymerfilms mit einer hohen Konzentration an Silbernanopartikeln, umfassend:
Bereitstellen einer viskosen Bildungszusammensetzung, umfassend Silbernitrat, Polyvinylalkohol und ein organisches Reduktionsmittel;
Trocknen der Bildungszusammensetzung unter Reduzieren von Silberionen mit dem organischen Reduktionsmittel, um einen Film mit Silbernanopartikeln zu bilden;
Anlegen eines elektrischen Feldes, um einen Füllgrad der sich in dem Polymerfilm bildenden Silbernanopartikel zu verändern und um die Silbernanopartikel zu stabilisieren; und
Anwenden von UV-Bestrahlung, um die Reduktion der Silberionen zu beschleunigen und um den Polymerfilm zu trocknen.

2. Verfahren nach Anspruch 1, wobei das Anlegen des elektrischen Feldes das Fließen eines elektrischen Stroms von 2-6 mA durch den Polymerfilm umfasst.

3. Verfahren nach Anspruch 1, wobei das Anlegen des elektrischen Feldes das Fließen eines elektrischen Stroms durch den Polymerfilm über eine Einwirkungszeit von 1,5-2,5 Stunden umfasst.

4. Verfahren nach Anspruch 1, wobei das Anwenden der UV-Bestrahlung eine Zeitdauer von 65-100 Minuten umfasst.

5. Verfahren nach Anspruch 1, wobei das Anwenden der UV-Bestrahlung eine integrierte Lichtleistung von 10,9-12 mW/cm² umfasst.

## Revendications

1. Procédé de production d'un film polymère à base d'alcool polyvinylique (PVA) présentant une concentration élevée en nanoparticules d'argent, comprenant :
la préparation d'une composition de formage visqueuse comprenant du nitrate d'argent, de l'alcool polyvinylique et un agent réducteur organique ;
le séchage de la composition de formage par réduction des ions d'argent avec l'agent réducteur organique pour former un film comprenant des nanoparticules d'argent ;
l'application d'un champ électrique pour modifier un degré de charge des nanoparticules d'argent formées dans le film polymère et pour stabiliser les nanoparticules d'argent ; et
l'application d'un rayonnement UV pour accélérer la réduction des ions d'argent et pour sécher le film polymère.

2. Procédé selon la revendication 1, où l'application du champ électrique comprend la circulation d'un courant électrique de 2-6 mA dans le film polymère.

3. Procédé selon la revendication 1, où l'application du champ électrique comprend la circulation d'un courant électrique dans le film polymère pendant un temps d'exposition compris entre 1,5 et 2,5 heures.

4. Procédé selon la revendication 1, où l'application du rayonnement UV comprend une durée entre 65 et 100 minutes.

5. Procédé selon la revendication 1, où l'application du rayonnement UV comprend une puissance lumineuse intégrée de 10,9 à 12 mW/cm².
